# EUROPÄISCHE PATENTANMELDUNG

(11) **EP 3 831 902 A1**
(43) Veröffentlichungstag der Anmeldung: **09.06.2021**
(21) Anmeldenummer: 19212822.1
(22) Anmeldetag: 02.12.2019
(51) Int. Cl.: C09J 5/02, C04B 26/00, C04B 40/06

(54) **VERFAHREN ZUR VERBESSERUNG DER HAFTUNG VON CHEMISCHEN ZWEIKOMPONENTEN-MÖRTELMASSEN AN DER OBERFLÄCHE VON BOHRLÖCHERN IN MAUERWERK**

(71) Anmelder: Hilti Aktiengesellschaft, 9494 Schaan (LI)
(72) Erfinder: Kumru, Memet-Emin, 86199 Augsburg (DE)
(74) Vertreter: Hilti Aktiengesellschaft Corporate Intellectual Property

(57) **Zusammenfassung**

Beschrieben wird ein Verfahren zur Verbesserung der Haftung von chemischen Zweikomponenten-Mörtelmassen auf der Basis von radikalisch härtbaren, ethylenisch ungesättigten Verbindungen an der Oberfläche von Bohrlöchern in Mauerwerk, wobei die Oberfläche der Bohrlöcher vor dem Einbringen der Mörtelmasse mit einem Primer behandelt wird.

## Beschreibung

Gegenstand der vorliegenden Erfindung ist ein Verfahren zur Verbesserung der Haftung von chemischen Zweikomponenten-Mörtelmassen mit einer Harzkomponente (A), die als härtbaren Bestandteil mindestens eine radikalisch härtbare, ethylenisch ungesättigte Verbindung (a) enthält, und einer davon reaktionsinhibierend getrennt angeordneten Härterkomponente (B), die ein Härtungsmittel für das Harz der Harzkomponente (A) enthält, an der Oberfläche von Bohrlöchern in Mauerwerk, wobei die Oberfläche der Bohrlöcher vor dem Einbringen der Mörtelmasse mit einem Primer behandelt wird.

Zur Befestigung von Bauteilen, wie Ankergewindestangen, Bewehrungseisen, Gewindehülsen und Schrauben in Bohrlöchern, die in mineralischem Untergrund, wie Mauerstein, Naturstein, Putz, Beton etc. vorliegen, werden namentlich dann, wenn hohe Lastwerte der Fixierung erreicht werden sollen, chemische Zweikomponenten-Mörtelmassen eingesetzt, die eine Harzkomponente umfassen, welche mindestens eine radikalisch härtbare, ethylenisch ungesättigte Verbindung enthalten, und eine davon reaktionsinhibierend getrennt angeordnete Härterkomponente, die ein Härtungsmittel für das Harz der Harzkomponente enthält. Bei der Anwendung werden zunächst die Bohrlöcher zur Aufnahme der zu befestigenden Bauteile mit den entsprechenden Abmessungen in den mineralischen Untergrund gebohrt. Anschließend müssen die Bohrlöcher von dem Bohrstaub befreit werden, wonach die chemische Zweikomponenten-Mörtelmasse nach Vermischen der Harzkomponente mit der Härterkomponente in das Bohrloch eingebracht und dann das zu befestigende Bauteil in das mit der Mörtelmasse angefüllte Bohrloch eingeführt und justiert wird. Nach dem Aushärten durch Reaktion der Harzkomponente mit der Härterkomponente wird ein fester Halt des Bauteils erreicht.

Die Lastwerte der in dieser Weise befestigten Bauteile und damit ihr Tragverhalten hängt von mehreren Einflussgrößen ab, die in der Literatur in zwei Klassen als interne und externe Größen eingeteilt werden. Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Zu den internen Einflussgrößen gehören die chemische Zusammensetzung der Mörtelmasse, ihr Herstellungsprozess und ihre Verpackung, die in der Regel zwei Komponenten umfasst, die in getrennten Behältern, wie Glas und dergleichen, enthalten sind.

Um auf die unterschiedlichen externen Einflussgrößen reagieren zu können, wurden in der Vergangenheit chemische Mörtelmasse für bestimmte Einsatzzwecke entwickelt. Etwa speziell für tiefe Temperaturen, für ungereinigte Bohrlöcher für den Einsatz im Beton oder den Einsatz im Ziegel.

Auch wenn Entwicklungen laufen, so gibt es noch kein Produkt bzw. keine chemische Mörtelmasse auf dem Markt, welche für mehrere Einsatzzwecke tauglich ist und unter unterschiedlichen Bedingungen jeweils hohe Lastwerte ermöglichen, möglichst ohne Kompromisse eingehen zu müssen. Insbesondere ist es noch nicht gelungen, eine speziell für Beton entwickelte Mörtelmasse für die Anwendung in Mauerwerk, insbesondere im Ziegel zu entwickeln, die sowohl in Beton als auch im Mauerwerk hohe Lastwerte ermöglichen kann.

Es hat sich gezeigt, dass eine wesentliche Einflussgröße auf das Tragverhalten der chemischen Mörtelmasse in der Art des mineralischen Untergrunds liegt. So hat sich gezeigt, dass in Bohrlöchern in Mauerwerk eine erhebliche Leistungsabnahme eintritt, die sich in verringerten Lastwerten manifestiert. Dies führen die Erfinder darauf zurück, dass Bestandteile der Mörtelmasse in das Mauerwerk eindringen und die Leistungsfähigkeit der Mörtelmasse stören.

Bisher hat sich der Stand der Technik im Wesentlichen mit der Überwindung des Nachteils in feuchten oder schlecht gereinigten Bohrlöchern beschäftigt, wie in der AU 2010200119 A1 beschrieben.

Es besteht daher weiterhin Bedarf an einer Möglichkeit in Mauerwerk, wie Naturstein, Ziegeln oder dergleichen, die Leistungsfähigkeit von Mörtelmassen zu steigern.

Somit ist Aufgabe der vorliegenden Erfindung, die Leistungsfähigkeit von chemischen Zweikomponenten-Mörtelmassen auf Basis einer radikalisch härtbaren, ethylenisch ungesättigten Verbindung in Mauerwerk, wie Naturstein, Ziegel oder dergleichen, insbesondere im Ziegel, zu steigern.

Die Lösung der Aufgabe der vorliegenden Erfindung ist die Bereitstellung eines Verfahrens, mit dem die Haftung von chemischen Zweikomponenten-Mörtelmassen der oben angegebenen Gattung an der Oberfläche von Bohrlöchern in Mauerwerk, wie beispielsweise Naturstein, Ziegel oder dergleichen, in einfacher Weise verbessert werden kann.

Mauerwerk besteht aus Mauersteinen oder Natursteinen, die lagenweise übereinandergeschichtet werden und Mauerwerksverbände ergeben. Üblicherweise sind die Steine durch ein Bindemittel (z.B. Mörtel) kraft- und formschlüssig miteinander verbunden. Unvermörteltes Mauerwerk wird als Trockenmauerwerk bezeichnet. Für das Mauerwerk können künstliche Steine oder Natursteine verwendet werden.

Künstliche Steine werden aus natürlichen Rohstoffen hergestellt, in die entsprechende Form gebracht und anschließend gehärtet. Je nach Art ihrer Erhärtung werden gebrannte und ungebrannte Steine unterschieden. Gebrannte Steine werden auch als Ziegel bezeichnet, ungebrannte Steine sind z.B. Kalksandsteine, Hüttensteine sowie Porenbeton-, Leichtbeton- und Betonsteine. Zu den Natursteinen gehören die Tiefengesteine Granit, Basalt, Porphyr und Tuffstein sowie die Sedimentgesteine Kalk-und Sandstein.

Es hat sich gezeigt, dass diese Aufgabe dadurch gelöst werden kann, dass man die Oberfläche der Bohrlöcher in dem Mauerwerk vor dem Einbringen der durch Vermischen der Harzkomponente (A) mit der Härterkomponente (B) gebildeten Mörtelmasse mit einem Primer behandelt. In dieser Weise gelingt es in überraschender und einfacher Weise, die Lastwerte der befestigten Bauteile deutlich zu verbessern.

Gegenstand der Erfindung ist daher das Verfahren gemäß Anspruch 1. Die Unteransprüche betreffen bevorzugte Ausführungsformen dieses Erfindungsgegenstandes.

Die Erfindung betrifft somit ein Verfahren zur Verbesserung der Haftung von chemischen Zweikomponenten-Mörtelmassen mit einer Harzkomponente (A), die als härtbaren Bestandteil mindestens eine radikalisch härtbare, ethylenisch ungesättigte Verbindung (a) enthält, und einer davon reaktionsinhibierend getrennt angeordneten Härterkomponente (B), die ein Härtungsmittel für das Harz der Harzkomponente (A) enthält, an der Oberfläche von Bohrlöchern in Mauerwerk, wobei die Oberfläche der Bohrlöcher vor dem Einbringen der Mörtelmasse mit einem Primer behandelt wird, dadurch gekennzeichnet, dass der Primer unter Hydroxyalkyl(meth)acrylaten, Acetoacetoxyalkyl(meth)acrylaten, Alkandioldi(meth)acrylaten, lösemittelhaltigen Polyurethanformulierungen, lösemittelhaltigen Synthesekautschukformulierungen und Silanen ausgewählt ist.

Als Silane können erfindungsgemäß solche verwendet werden, die mindestens eine reaktive organofunktionelle Gruppe, wie eine Amino-, Mercapto-, Epoxy-, Isocyanato-, Alkenyl-, (Meth)acryloyl-, Anhydrido- und/oder Vinyl-Gruppe, insbesondere eine (Meth)acryloyl- oder Vinylgruppe, und zugleich mindestens eine Si-gebundene hydrolysierbare Gruppe, wie eine Alkoxy- oder Halogen-Gruppe aufweisen.

Die Si-gebundene hydrolysierbare Gruppe ist bevorzugt eine C₁-C₇-Alkoxy-Gruppe und ganz besonders bevorzugt, eine Methoxy- oder Ethoxygruppe.

Geeignete Silane sind aus der Gruppe ausgewählt, die aus 3-Aminopropyltrialkoxysilanen, wie 3-Aminopropyltrimethoxysilan und 3-Aminopropyltriethoxysilan, 3-Glycidyloxypropyltrialkoxysilanen, wie 3-Glycidyloxypropyltrimethoxysilan und 3-Glycidyloxypropyltriethoxysilan, Glycidyloxymethyltrimethoxysilan, 3-Glycidyloxypropylmethyldimethoxysilan, Bis-(3-trialkoxysilylpropyl)amin, wie Bis-(3-trimethoxysilylpropyl)amin und Bis-(3-triethoxysilylpropyl)amin, 3-Mercaptopropyltrialkoxysilan, wie 3-Mercaptopropyltrimethoxysilan, 3-(Meth)acryloyloxypropyltrialkoxysilanen, wie 3-(Meth)acryloyloxypropyltrimethoxysilan, 3-(Meth)acryloyloxypropyltriethoxysilan, 3-(Meth)acryloyloxymethyltrimethoxysilan oder 3-(Meth)acryloyloxymethyltriethoxysilan und 3-(Meth)acryloyloxypropylmethyldimethoxysilan, Alkenylalkoxysilane, wie Vinylalkoxysilane, z.B. Vinyltrimethoxysilan und Vinyltriethoxysilan, und Tetraalkoxysilan, wie Tetraethoxysilan, Tetramethoxysilan und Tetrapropoxysilan, und Gemische von zwei oder mehr davon besteht.

Besonders bevorzugt sind 3-(Meth)acryloyloxypropyltrialkoxysilane, wie 3-(Meth)acryloyloxypropyltrimethoxysilan und 3-(Meth)acryloyloxypropyltriethoxysilan, 3-(Meth)acryloyloxymethyltrimethoxysilan, 3-(Meth)acryloyloxymethyltriethoxysilan, 3-(Meth)acryloyloxypropylmethyldimethoxysilan, Alkenylalkoxysilane, wie Vinylalkoxysilane, etwa Vinyltrimethoxysilan und Vinyltriethoxysilan, wovon 3-Methacryloxypropyltrimethoxysilan, 3-Methacryloxymethyltrimethoxysilan und Vinyltrimethoxysilan ganz besonders bevorzugt sind.

Geeignete Hydroxyalkyl(meth)acrylate sind ausgewählt aus der Gruppe, bestehend aus Hydroxyethyl(meth)acrylat, Hydroxypropyl(meth)acrylate, wie 2-Hydroxypropylmethacrylat und 3-Hydroxypropylmethacrylat, und Alkandioldi(meth)acrylate, wie Ethandiol-1,2-di(meth)acrylat, Propandiol-1,3-di(meth)acrylat, Butandiol-1,2-di(meth)acrylat, Butandiol-1,3-di(meth)acrylat, Butandiol-1,4-di(meth)acrylat und Hexandiol-1,6-di(meth)acrylat.

Gemäß einer bevorzugten Ausführungsform der Erfindung wird die Oberfläche der Bohrlöcher vor dem Einbringen der Mörtelmasse mit einem Primer behandelt, der aus der Gruppe bestehend aus Hydroxypropyl(meth)acrylat, Butandioldi(meth)acrylat, 3-Methacryloxypropyltrimethoxysilan, 1,3-Bis(3-methacryloxypropyl)tetramethyldisiloxan, lösemittelhaltiger Polyurethanformulierung, lösemittelhaltiger Synthesekautschukformulierung, 2-(Acetoacetoxy)ethylmethacrylat ausgewählt ist. Darunter sind Hydroxypropylmethacrylat, Butandioldimethacrylat, 3-Methacryloxypropyltrimethoxysilan und 2-(Acetoacetoxy)ethylmethacrylat bevorzugt, wovon 2-Hydroxypropylmethacrylat, 1,4-Butandioldimethacrylat und 3-Methacryloxypropyltrimethoxysilan besonders bevorzugt sind.

Bei dem erfindungsgemäßen Verfahren kann man der Primer entweder in reiner Form oder aber auch in Form einer Mischung einsetzen, vorzugsweise zusammen mit einem weiter unten näher beschriebenen Beschleuniger.

Dementsprechend wird bei einem weiter bevorzugten erfindungsgemäßen Verfahren die Oberfläche der Bohrlöcher mit einer Mischung aus einem oben beschriebenen Primer und einem Beschleuniger behandelt.

Als Beschleuniger sind Verbindungen geeignet, wie sie zur Beschleunigung in üblichen chemischen Mörtelmassen auf der Basis von radikalisch härtbaren, ethylenisch ungesättigten Verbindungen, wie eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen, Verwendung finden.

Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind symmetrisch oder asymmetrisch substituierten Anilin- und Toluidin-Derivate und N,N-Bis(hydroxy)alkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine und 4,4'-Bis(dimethylamino)diphenylmethan und/oder die Leucoformen der Farbstoffe Kristallviolett oder Malachitgrün.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und para-Toluidin Ethoxylat.

Die Basis der chemischen Mörtelmasse sind radikalisch härtbare, ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Besonders bevorzugt ist die radikalisch härtbare, ethylenisch ungesättigte Verbindung, das Reaktionsharz, eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate. Zu diesen zählen als bevorzugte Harze die in der DE 10 2011 017 626 B4 beschriebenen Urethanmethacrylatharze.

Besonders geeignet sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Erfindungsgemäß kann das Behandeln der Oberfläche der Bohrlöcher mit dem Primer oder dessen Mischung erfolgen, indem die Oberfläche bestrichen oder besprüht, bevorzugt besprüht wird. Bei der erfindungsgemäßen Verfahrensweise ist es lediglich erforderlich, dass das Bohrloch einmal mit einem geeigneten Gerät, wie es bei der Anwendung von chemischen Mörtelmassen üblich ist, ausgeblasen und anschließend mit dem Primer in reiner oder verdünnter Form bestrichen oder besprüht wird. Bei dieser gegenüber dem Normalfall verringerten Reinigung ergeben sich bei trockenem Beton ähnliche Lastwerte wie in stark gereinigten Bohrlöchern, bei denen die Reinigung durch mehrfaches Aussaugen und Reinigung des Bohrlochs mittels eines Staubsaugers bzw. einer Bürste erfolgt. Damit lässt sich also eine deutliche Verringerung des Arbeitsaufwands bei der Vorbereitung der Bohrlöcher in dem mineralischen Untergrund erzielen.

Das erfindungsgemäße Verfahren ermöglicht somit eine verbesserte Leistung von chemischen Mörtelmassen im Mauerwerk, insbesondere im Ziegel, die nicht speziell für die Verwendung im Ziegel entwickelt wurden. Somit wird es möglich, chemische Mörtelmassen, die vor allem zur Verwendung im Beton gedacht sind, auch im Ziegel einzusetzen, ohne Einbußen bei der Leistung hinnehmen zu müssen.

### AUSFÜHRUNGSBEISPIELE

Um die Wirkung des erfindungsgemäßen Verfahrens zu zeigen, wurde als chemische Zweikomponenten-Mörtelmasse HIT HY 200 A der Hilti Aktiengesellschaft, eine für den Einsatz im Beton entwickelte Mörtelmasse, verwendet.

Als Vergleich diente HIT-HY 270 der Hilti Aktiengesellschaft, eine für den Einsatz im Ziegel entwickelte Mörtelmasse.

Es wurden Auszugsversuche in Augsburger Ziegel gemacht, um den Einfluss des Vorbehandelns des Bohrlochs mit einem Primer zu untersuchen.

### Bestimmung der Lastwerte

Zur Bestimmung der Lastwerte der ausgehärteten Masse verwendete man eine hochfeste Ankergewindestange M 10, die in ein Bohrloch mit einem Durchmesser von 12 mm und einer Bohrlochtiefe von 60 mm in Augsburger Ziegel mit der angegebenen chemischen Zweikomponenten-Mörtelmasse eingedübelt wurde. Man ermittelt die mittlere Versagenslast durch zentrisches Ausziehen der Ankergewindestange mit enger Abstützung. Es wurden jeweils fünf Ankergewindestangen eingedübelt und nach einer Aushärtezeit von 24 Stunden bei Raumtemperatur wurden die Lastwerte bestimmt. Die hierbei ermittelten Lastwerte sind in der nachfolgenden Tabelle 1 aufgeführt.

Die für diese Untersuchung verwendeten Bohrlöcher wurden diese manuell gereinigt, wobei ein Mauerziegel (240 mm x 115 mm x 113 mm) mit einer Druckfestigkeit von 20 MPa und einer Rohdichte von 1,8 kg/dm³ (Rapis-Ziegel Schmid GmbH & Co. KG) als Mauerwerk verwendete wurde.

**Tabelle 1: Ergebnisse der Lastwertbestimmung (manuelle Bohrlochreinigung)**

| | [MPa] |
|---|---|
| **HIT-HY 200A** | **7,6** |
| **HIT-HY 270** | **7,5** |
| 3-Methacryloxypropyltrimethoxysilan | 8,6 |
| 1,4-Butandioldimethacrylat + 2,5 Gew.-% Di-*iso*-propyl-*p-*toluidin | 9,3 |
| 2-Hydroxypropylmethacrylat + 2,5 Gew.-% Di-*iso*-propyl-*p-*toluidin | 11,2 |

### Manuelle Reinigung:

Für die manuelle Reinigung wurde das Bohrloch durch zweimaliges Ausblasen mit einer HILTI HIT Handpumpe, anschließendes zweimaliges Ausbürsten mit einer HILTI HIT-RB Rundbürste und erneutes zweimaliges Ausblasen mit einer HILTI HIT Handpumpe gereinigt. Unmittelbar vor dem Setzen der Ankerstange sprühte man das Bohrloch mit dem aus Tabelle 1 ersichtlichen Primer bzw. der Mischung aus Primer und Beschleuniger (etwa 2,4 g Primer bzw. Mischung) aus und setzte die Ankerstange wie eingangs beschrieben.

Um den Einfluss der Reinigungsart und der Menge des Primers auf die Lastwerte zu untersuchen, wurden Versuche mit einer Mischung aus 2-Hydroxypropylmethacrylat und 2,5 Gew.-% Di-*iso*-propyl-*p*-toluidin (in Tabelle 2 kurz als HPMA - Dippt bezeichnet) in unterschiedlichen Konzentrationen (siehe Tabelle 2) unternommen, wobei einmal das Bohrloch manuell (wie oben beschrieben) und einmal mit Druckluft gereinigt wurde.

### Druckluftreinigung:

Für die Druckluftreinigung wurde das Bohrloch durch zweimaliges Ausblasen mit Druckluft (6 bar), anschließendes zweimaliges Ausbürsten mit einer HILTI HIT-RB Rundbürste und erneutes zweimaliges Ausblasen mit Druckluft (6 bar) gereinigt. Unmittelbar vor dem Setzen der Ankerstange sprühte man das Bohrloch mit der Primer-Beschleuniger-Mischung aus und setzte die Ankerstange wie eingangs beschrieben.

Die in dieser Weise eingedübelten Ankergewindestangen werden dann in der oben beschriebenen Weise im Hinblick auf ihre mittlere Versagenslast untersucht. Die in dieser Weise ermittelten Verbundspannungen sind in der nachfolgenden Tabelle 2 zusammengefasst.

**Tabelle 2: Ergebnisse der Lastwertbestimmung (manuelle Reinigung vs. Druckluftreinigung)**

| | [MPa] | Leistung [%] |
|---|---|---|
| **Kein Primer / Druckluftreinigung** | **9** | **100** |
| **Kein Primer / manuelle Reinigung** | **7** | **100** |
| | | |
| HPMA + Dippt / 0,36 g / Druckluftreinigung | 10 | 104 |
| HPMA + Dippt / 0,36 g / manuelle Reinigung | 8 | 107 |
| | | |
| HPMA + Dippt / 0,72g / Druckluftreinigung | 11 | 118 |
| HPMA + Dippt / 0,72 g / manuelle Reinigung | 10 | 142 |
| | | |
| HPMA + Dippt / 1,44 g / Druckluftreinigung | 11 | 116 |
| HPMA + Dippt / 1,44 g / manuelle Reinigung | 10 | 132 |
| | | |
| HPMA + Dippt / 1,80 g / Druckluftreinigung | 12 | 129 |
| HPMA + Dippt / 1,80 g / manuelle Reinigung | 11 | 148 |
| | | |
| HPMA + Dippt / 2,4 g / Druckluftreinigung | 10 | 107 |
| HPMA + Dippt / 2,4 g / manuelle Reinigung | 12 | 164 |

Ferner wurde der Einfluss des erfindungsgemäßen Verfahrens auf die Leistung bei unterschiedlichen Temperaturen untersucht.

Hierzu wurden die Bohrlöcher manuell gereinigt und auf die entsprechende Temperatur gebracht, wobei ein Mauerziegel (240 mm x 115 mm x 113 mm) mit einer Druckfestigkeit von 20 MPa und einer Rohdichte von 1,8 kg/dm³ (Rapis-Ziegel Schmid GmbH & Co. KG) als Mauerwerk verwendete wurde. Die hierbei ermittelten Lastwerte sind in der nachfolgenden Tabelle 3 aufgeführt.

**Tabelle 3: Ergebnisse der Lastwertbestimmung (manuelle Bohrlochreinigung)**

| | **[MPa] bei 0°C** | **[MPa] bei +5°C** | **[MPa] bei +25°C** |
|---|---|---|---|
| **HIT-HY 200A** | 4,3 | 4,2 | 7,6 |
| **HIT-HY 270** | 7,5 | 10,0 | 12,2 |
| HPMA + Dippt / 2,4 g | 6,1 | 6,3 | 11,2 |

## Patentansprüche

1. Verfahren zur Verbesserung der Haftung von chemischen Zweikomponenten-Mörtelmassen mit einer Harzkomponente (A), die als härtbaren Bestandteil mindestens eine radikalisch härtbare, ethylenisch ungesättigte Verbindung (a) enthält, und einer davon reaktionsinhibierend getrennt angeordneten Härterkomponente (B), die ein Härtungsmittel für das Harz der Harzkomponente (A) enthält, an der Oberfläche von Bohrlöchern in Mauerwerk, wobei die Oberfläche der Bohrlöcher vor dem Einbringen der Mörtelmasse mit einem Primer behandelt wird, **dadurch gekennzeichnet, dass** der Primer unter Hydroxyalkyl(meth)acrylaten, Acetoacetoxyalkyl(meth)acrylaten, Alkandioldimethacrylaten, lösemittelhaltigen Polyurethanformulierungen, lösemittelhaltigen Synthesekautschukformulierungen und Silanen.

2. Verfahren nach Anspruch 1, **dadurch gekennzeichnet, dass** das Silan mindestens eine reaktive organofunktionelle Gruppe, insbesondere eine (Meth)acryloyl- oder Vinylgruppe, und zugleich mindestens eine Si-gebundene hydrolysierbare Gruppe aufweist

3. Verfahren nach Anspruch 1 oder 2, **dadurch gekennzeichnet, dass** der Primer aus der Gruppe bestehend aus Hydroxypropyl(meth)acrylat, Butandioldi(meth)acrylat, 3-Methacryloxypropyltrimethoxysilan, 1,3-Bis(3-methacryloxypropyl)tetramethyl-disiloxan, lösemittelhaltiger Polyurethan-formulierung, lösemittelhaltiger Synthesekautschukformulierung, 2-(Acetoacetoxy)ethylmethacrylat ausgewählt ist.

4. Verfahren nach einem der vorhergehenden Ansprüche, **dadurch gekennzeichnet, dass** der Primer aus der Gruppe bestehend aus 2-Hydroxypropylmethacrylat, 1,4-Butandioldimethacrylat und 3-Methacryloxypropyltrimethoxysilan ausgewählt ist.

5. Verfahren nach einem der vorhergehenden Ansprüche, **dadurch gekennzeichnet, dass** die Oberfläche der Bohrlöcher mit einer Mischung aus dem Primer und einem Beschleuniger behandelt wird.

6. Verfahren nach Anspruch 5, **dadurch gekennzeichnet, dass** der Beschleuniger unter symmetrisch oder asymmetrisch substituierten Anilin- und Toluidin-Derivaten und N,N-Bis(hydroxy)alkylarylaminen ausgewählt ist.

7. Verfahren nach Anspruch 6, **dadurch gekennzeichnet, dass** der Beschleuniger aus der Gruppe bestehend aus N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine, 4,4'-Bis(dimethylamino)diphenylmethan und die Leucoformen der Farbstoffe Kristallviolett und Malachitgrün ausgewählt ist.

8. Verfahren nach Anspruch 7, **dadurch gekennzeichnet, dass** die Oberfläche der Bohrlöcher vor dem Einbringen der Mörtelmasse mit einer Mischung aus (i) 2-Hydroxypropylmethacrylat und Di-*iso*-propyl-*p*-toluidin, (ii) 1,4-Butandioldimethacrylat und Di-*iso*-propyl-*p*-toluidin, oder (iii) 2-(Acetoacetoxy)ethylmethacrylat, Di-*iso*-propyl-*p*-toluidin und 4-Hydroxy-2,2,6,6-tetramethylpiperidinyloxyl behandelt wird.

9. Verfahren nach Anspruch 8, **dadurch gekennzeichnet, dass** die Oberfläche der Bohrlöcher vor dem Einbringen der Mörtelmasse mit einer Mischung aus 2-Hydroxypropylmethacrylat und Di-*iso*-propyl-*p*-toluidin behandelt wird.

10. Verfahren nach mindestens einem der vorhergehenden Ansprüche, **dadurch gekennzeichnet, dass** die mindestens eine radikalisch härtbare, ethylenisch ungesättigte Verbindung (a) eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen ist.

11. Verfahren nach mindestens einem der vorhergehenden Ansprüche, **dadurch gekennzeichnet, dass** die Behandlung der Oberfläche der Bohrlöcher mit dem Primer bzw. der Mischung aus Primer und Beschleuniger durch Besprühen erfolgt.
